# EUROPÄISCHE PATENTSCHRIFT

(11) **EP 1 468 220 B1**
(45) Veröffentlichungstag und Bekanntmachung des Hinweises auf die Patenterteilung: **17.08.2005**
(21) Anmeldenummer: 03704403.9
(22) Anmeldetag: 15.01.2003
(51) Int. Cl.: F16L 41/06, F16L 47/00

(54) **ARMATUR**
FITTING
GARNITURE

(30) Priorität: 23.01.2002 DE 10202676
(43) Veröffentlichungstag der Anmeldung: 20.10.2004
(73) Patentinhaber: Friatec Aktiengesellschaft, 68229 Mannheim (DE)
(72) Erfinder: MAIER, Fabian, 67368 Westheim (DE); SICHLER, Wolfgang, 68239 Mannheim (DE)
(74) Vertreter: Schmitt, Meinrad, Dipl.-Ing.
(86) Internationale Anmeldenummer: PCT/EP2003/000350
(87) Internationale Veröffentlichungsnummer: WO 2003/062695

(56) Entgegenhaltungen:
- DE-B- 1 028 839
- DE-B- 1 153 591
- FR-A- 616 904
- PATENT ABSTRACTS OF JAPAN vol. 2000, no. 20, 10. Juli 2001 (2001-07-10) -& JP 2001 059594 A (HITACHI METALS LTD;TOKYO GAS CO LTD), 6. März 2001 (2001-03-06)

## Beschreibung

Die Erfindung bezieht sich auf eine Armatur gemäß der im Oberbegriff des Patentanspruch 1 angegebenen Merkmale.

Aus der EP 0 845 630 A 2 ist eine derartige Armatur bekannt, welche als Anbohrarmatur ausgebildet ist und deren aus Kunststoff bestehendes Gehäuse durch Elektroschweißen mit einem Kunststoffrohr verbindbar ist. Die Armatur enthält einen Stutzen, in welchem ein einen Bohrer aufweisender Körper axial zur Stutzenachse derart bewegbar ist, dass in das genannte Rohr eine Bohrung eingebracht werden kann. Der Stutzen weist ferner einen im wesentlichen rechtwinklig angeordneten Abzweigstutzen auf zum Anschluss einer Abzweigleitung, in welche nach dem Anbohren des Rohres das in diesem strömende Medium, wie Wasser oder Gas, in die Abzweigleitung strömen kann. Ferner ist aus der EP 0 572 817 B 1 oder der DE 10 28 839 B eine Anbohrarmatur mit integriertem Ventil bekannt, mittels welchem bei Bedarf die Verbindung zwischen dem Rohr und der Abzweigleitung geschlossen oder frei gegeben werden kann.

Des Weiteren ist aus dem Gebrauchsmuster DE 93 19 910 U 1 eine Elektroschweißmuffe für die Verbindung von aus Kunststoff bestehenden Gasleitungen bekannt. In dieser Elektroschweißmuffe ist eine Sicherheitsschließvorrichtung angeordnet, mittels welcher beispielsweise im Falle eines Rohrbruchs die Zuleitung verschlossen wird und somit das Ausströmen von Gas unterbunden wird. Die Sicherheitsschließvorrichtung ist als Ventil ausgebildet, dessen Ventilsitz mit der Elektroschweißmuffe verbunden ist und dessen Ventilkörper und Dichtelement unter Federbeaufschlagung in der Elektroschweißmuffe axial bewegbar angeordnet ist. Um nach dem automatischen Schließen des Ventils, beispielsweise aufgrund eines vorgegebenen Differenzdrucks und / oder eines Rohrbruches in Strömungsrichtung hinter der Schließvorrichtung, und nach der Reparatur des Rohrbruchs den Strömungsweg wieder frei zu geben, sind besondere Maßnahmen zum Öffnen des Ventils, nämlich Aufbringen eines Gegendrucks, durchzuführen. Der hiermit verbundene Aufwand ist nicht unerheblich.

Der Erfindung liegt daher die Aufgabe zugrunde, eine Armatur der genannten Art mit einem geringen konstruktiven Aufwand dahingehend weiterzubilden, dass die Sicherheitsanforderungen mit hoher Zuverlässigkeit erfüllt werden und bei Bedarf die Verbindung zu einer Abzweigleitung problemlos herstellbar ist. Es soll ein geringes Bauvolumen erreicht werden und ein geringer Fertigungs- und Montageaufwand gegeben sein.

Die Lösung dieser Aufgabe erfolgt gemäß der im Patentanspruch 1 angegebenen Merkmale.

Die vorgeschlagene Armatur zeichnet sich durch einen einfachen und funktionsgerechten Aufbau mit einer integrierten Sicherheits-Schließeinrichtung aus, welche mittels des im Stutzen axial bewegbaren Körpers betätigbar ist. Die Schließeinrichtung enthält ein Betätigungselement, welches mit dem genannten Körper derart in Eingriff bringbar ist, dass die Schließeinrichtung die Verbindung zwischen dem mit der Armatur verbundenen Rohr zur angeschlossenen Abzweigleitung frei gibt und somit das durch das Rohr strömende Medium, wie insbesondere Gas oder Wasser, in die Abzweigleitung strömen kann. Es erfolgt somit eine externe Aktivierung der Schließeinrichtung. Die Sicherheits-Schließeinrichtung ist als ein selbsttätig schließendes Ventil mit einem Ventilkörper und / oder Dichtelement derart ausgebildet, dass beispielsweise bei einer Beschädigung oder einem Bruch der angeschlossenen Abzweigleitung die Verbindung zum Rohr abgesperrt wird und das Medium nicht ausströmen kann. Nach Behebung des Störfalles kann in einfacher Weise durch axiales Bewegen der Körper mit dem Betätigungselement in Eingriff gebracht werden, um die Sicherheits-Schließeinrichtung wieder zu öffnen und den Strömungsweg in die Abzweigleitung frei zu geben.

Es sei hier angemerkt, dass der im Stutzen axial bewegbare Körper in bekannter Weise einen Bohrer zum Anbohren des mit der Armatur verbundenen Rohres und / oder einen Ventilkörper enthalten kann, wobei die Armatur als Anbohrarmatur oder als Ventil-Armatur und / oder eine kombinierte Anbohr-Ventilarmatur ausgebildet sein kann, wobei die genannten Funktionen in vorteilhafter Weise auch dann durchführbar sind, wenn in dem Rohr oder der Rohrleitung eines Versorgungsnetzes, insbesondere für Gas oder Wasser, das unter Druck stehende Strömungsmedium vorhanden ist. Die Armatur kann aus Metall ebenso bestehen wie aus Kunststoff, insbesondere Polyäthylen, wobei im letzteren Fall die Verbindung mit der Außenfläche des Rohrs in bekannter Weise durch Elektroschweißen hergestellt werden kann. Der die Sicherheits-Schließeinrichtung aufnehmende Abzeigstutzen ist in zweckmäßiger Weise integraler Bestandteil des Armaturengehäuses. Ferner kann im Rahmen der Erfindung der Abzweigstutzen in geeigneter Weise, insbesondere über eine Elektro-Schweißverbindung oder über eine Gewindeverbindung, mit dem den axial bewegbar angeordneten Körper aufnehmenden Stutzen der Armatur verbunden sein. Des Weiteren kann das freie Ende des Abgangsstutzens als Einsteckende ebenso ausgebildet sein wie geeignete Verbindungsmittel, insbesondere eine Elektroschweißmuffe, zum Anschluss der Abzweigleitung aufweisen. Des Weiteren sei ausdrücklich festgehalten, dass bei Ausbildung des Körpers nur mit einem Bohrer eine dem Körper bzw. Bohrer zugeordnete Ventilfunktion entfallen kann, und ausschließlich mittels der im Abzweigstutzen erfindungsgemäß vorgesehenen Schließeinrichtung bei Bedarf die Verbindung zwischen dem Rohr und der Abzweigleitung abgesperrt werden kann.

Weiterbildungen und besondere Ausgestaltungen der Erfindung sind in den Unteransprüchen sowie der Beschreibung von Ausführungsbeispielen angegeben.

Die Erfindung wird nachfolgend an Hand besonderer in der Zeichnung dargestellter Ausführungsbeispiele näher erläutert, ohne dass insoweit eine Beschränkung erfolgt. Es zeigen:
- Fig. 1: schematisch in einem axialen Schnitt eine als Anbohrarmatur ausgebildete Armatur mit integrierter Sicherheits-Schließeinrichtung,
- Fig. 2: vergrößert eine Detaildarstellung einer besonderen SicherheitsSchließeinrichtung bei offener Verbindung zum Abzweigstutzen,
- Fig. 3: eine Detaildarstellung ähnlich Fig. 2 bei geschlossener Verbindung,
- Fig. 4: eine Detaildarstellung entsprechend Fig. 2 zu Beginn der Freigabe der Verbindung,
- Fig. 5: eine Detaildarstellung entsprechend Fig. 2 bei frei gegebener Verbindung.

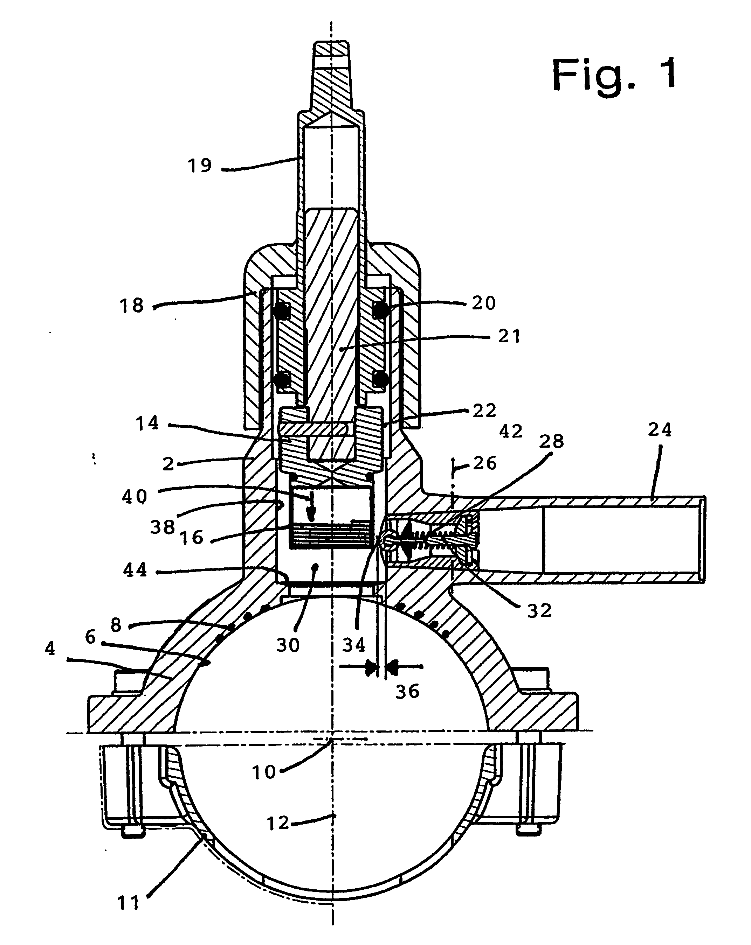

Fig. 1 zeigt einen Schnitt durch eine als Anbohrarmatur ausgebildete Armatur mit einem Gehäuse aus Kunststoff, wie insbesondere Polyäthylen, welches einen Stutzen 2 und ein Sattelstück 4 aufweist. Das Sattelstück 4 enthält an der Innenfläche 6 eine Heizwicklung 8, mittels welcher eine dichte und feste Verbindung mit einem hier nicht dargestellten Rohr aus Kunststoff in bekannter Weise herstellbar ist. Die Innenfläche 6 liegt im wesentlichen koaxial zu einer Längsachse 10, welche orthogonal zur Zeichenebene steht und zumindest näherungsweise mit der Längsachse des genannten Rohres übereinstimmt. Das Sattelstück 4 ist mittels einer Schelle 11 in bekannter Weise auf dem Rohr fixierbar. Im Stutzen 2 ist ein entlang der Stutzenachse 12 axial bewegbarer Körper 14 vorgesehen, an dessen gemäß Zeichnung unterem Ende ein Bohrer 16 zum Anbohren des Rohres vorgesehen ist. Gemäß Zeichnung ist der Stutzen 2 oben mittels einer Kappe 18 verschlossen, durch welche eine um die Stutzenachse 12 drehbare Spindel 19 durchgeführt ist.

Die in den Stutzen 2 hineinragende Spindel 19 ist bezüglich der Innenfläche des Stutzens 2 oder einer dort vorhandenen, bevorzugt aus Metall bestehenden und in dem Kunststoff der Armatur bzw. des Stutzens 2 drehfest und axial unverschiebbar angeordneten Führungs- oder Gewindebuchse, welche hier nicht weiter dargestellt ist, mittels Dichtungsringen 20 abgedichtet. In die innen hohle Spindel 19 greift von unten ein Zapfen 21 teleskopartig ein, mit welchem der axial bewegbare Körper 14 drehfest verbunden ist. Der Zapfen 21 ist im Inneren der Spindel 19 axial verschiebbar gelagert, und der Körper 14 besitzt an seiner Außenfläche ein Außengewinde 22. Das Außengewinde 22 greift oder schneidet - abweichend von der Zeichnung - in die Innenfläche des Stutzens 2 ein. Durch Drehen der Spindel 19 kann somit der Bohrer 16 gemäß Zeichnung nach unten zum Anbohren des genannten Rohres bewegt werden. Nach dem Anbohren kann durch Drehen der Spindel 19 in der entgegengesetzten Drehrichtung der Bohrer 16 wieder axial nach oben in die dargestellte Position bewegt werden. Alternativ kann der Stutzen 2 die erwähnte Führungsbuchse mit einem Innengewinde enthalten, in welches das Außengewinde 22 des Körpers 14 eingreift.

Am Stutzen 2 ist seitlich, bevorzugt orthogonal zur Stutzenachse 12, ein Abzweigstutzen 24 zum Anschluss einer Abzweigleitung angeordnet. Das freie Ende des Abzweigstutzens 24 ist hier als Einsteckende ausgebildet, um insbesondere mittels einer Elektroschweißmuffe eine Verbindung mit der Abzweigleitung herstellen zu können. Alternativ kann das freie Ende des Abzweigstutzens 24 geeignete Verbindungsmittel, insbesondere eine Elektroschweißmuffe oder eine Gewindeverbindung oder dergleichen, zum Anschluss der Abzweigleitung aufweisen. Der Abzweigstutzen 24 ist in vorteilhafter Weise integraler Bestandteil des Gehäuses bzw. einstückig mit dem Stutzen 2 verbunden. Des Weiteren kann im Rahmen der Erfindung der Abzweigstutzen auch als separates Bauteil ausgebildet sein, und wie mit strichpunktierter Linie 26 angedeutet, in geeigneter Weise, insbesondere mittels einer Elektroschweißverbindung, oder bei Ausbildung der Gehäusearmatur und des Abzweigstutzens aus Metall mittels einer Gewindeverbindung oder dergleichen mit dem Armaturengehäuse verbunden sein.

Im Abzweigstutzen ist erfindungsgemäß eine hier nur schematisch angedeutete Schließeinrichtung 28 angeordnet, welche insbesondere als eine Sicherheits-Schließeinrichtung ausgebildet ist. Die Schließeinrichtung 28 ist in vorteilhafter Weise derart ausgebildet, dass bei einem vorgebbaren Druckabfall in der angeschlossenen Abzweigleitung, beispielsweise bei einer Beschädigung oder einem Bruch der Abzweigleitung, die Verbindung zwischen dem genannten Rohr bzw. dem Innenraum 30 des Stutzens 2 zur Abzweigleitung selbsttätig abgesperrt bzw. unterbrochen wird und das unerwünschte Austreten des Strömungsmediums verhindert wird. Die Schließeinrichtung 28 ist als ein aufgrund einer vorgebbaren Druckdifferenz zwischen dem Innenraum 30 und der in Strömungsrichtung nachgeschalteten Abzweigleitung sich selbsttätig schließendes Ventil ausgebildet und enthält ein Betätigungselement 32, mit welchem bei Bedarf die Verbindung wieder frei gegeben werden kann. Das Betätigungselement 32 ist derart angeordnet und / oder ausgebildet, dass es in der abgesperrten Position der Schließeinrichtung 28 mit dem Körper 14 in Eingriff bringbar ist. Das Betätigungselement 32 ragt hierzu mit seinem freien Ende 34 in einem vorgegebenen Abstand 36 über die Innenfläche 38 des Innenraums 30 in diesen hinein. Durch axiale Bewegung des Körpers 14 in Richtung des Pfeiles 40 gelangt der Körper 14 mit dem Betätigungselement 32 bzw. dessen freiem Ende 34 derart in Eingriff, dass das Betätigungselement 32 zum Öffnen der Sicherheits-Schließeinrichtung 28 gemäß Zeichnung nach rechts verschoben wird. Mittels des Körpers 14 erfolgt somit erfindungsgemäß eine externe Aktivierung der Schließeinrichtung 28. Der Körper 14 besitzt somit eine Doppelfunktion dahingehend, dass er zum einen in bekannter Weise zum Anbohren des Rohres und zum anderen zur externen Aktivierung der Schließeinrichtung 28 genutzt wird. Es sei hier ausdrücklich festgehalten, dass der Körper 14 zusätzlich oder alternativ zum Bohrer 16 als Bestandteil eines Ventils ausgebildet sein kann und einen Ventilkörper oder eine Dichtfläche 42 enthalten kann, welcher mit einem Ventilsitz 44 dichtend in Eingriff bringbar ist, welcher am unteren Ende im Inneren des Stutzens 2 bzw. des Armaturengehäuses angeordnet ist.

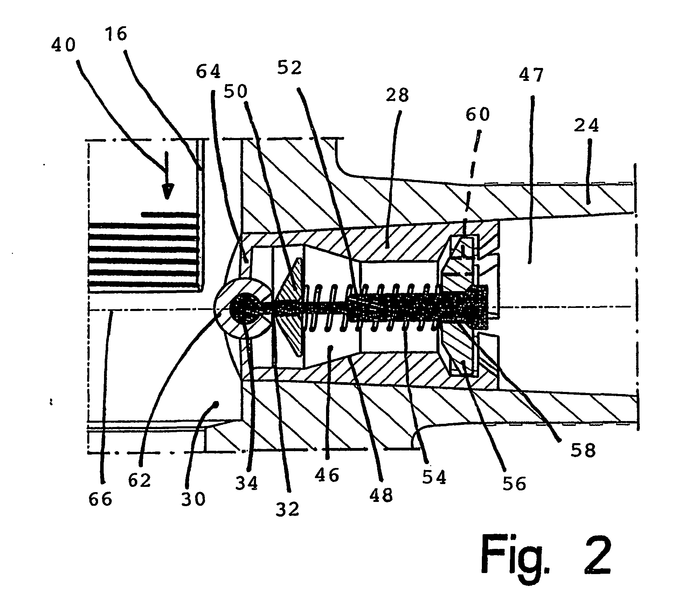

Fig. 2 zeigt vergrößert im Detail die Armatur mit einer besonderen Ausgestaltung der im Innenraum 47 des Abzweigstutzens 24 vorgesehenen Schließeinrichtung 28. Hierbei ist im Vergleich mit Fig. 1 der Bohrer 16 in Richtung des Pfeiles 40 bis in den Bereich der Schließeinrichtung 28 bewegt dargestellt. Die Schließeinrichtung 28 enthält für das Strömungsmedium innen einen Durchgangsraum 46 mit einem Ventilsitz 48, welchem ein Ventilkörper 50 zugeordnet ist. Der Ventilkörper 50 befindet sich in der Offen-Position, so dass das Strömungsmedium vom Innenraum 30 durch den Durchgangsraum 46 in den anschließenden Innenraum 47 des Abzweigstutzens 24 und von dort in die angeschlossene Abzweigleitung strömen kann. Der Ventilkörper 50 ist auf einem bolzenartigen Führungskörper 52 angeordnet und wird mittels eines Federelements 54 auf einem Stützkörper 56 abgefangen, welcher im Inneren der Schließeinrichtung 28 in der dargestellten Weise abgestützt ist. Der Stützkörper 56 enthält zum einen eine zentrale Bohrung 58 für den Führungskörper 52 und ferner radial beabstandet Durchgangsbohrungen 60 für das Strömungsmedium. Dem Ventilkörper 50 ist erfindungsgemäß das Betätigungselement 32 zugeordnet, welches in bevorzugter Weise integraler Bestandteil des Führungskörpers 52 ist und das freie Ende 34 aufweist. Wie ersichtlich, ist das freie Ende 34 zumindest teilweise kugelförmig und / oder als Lagerelement ausgebildet und wird von einem Lagerkörper 62 zumindest teilweise umgeben, welcher über radiale Stege 64 in der Schließeinrichtung 28 und / oder dem Armaturengehäuse abgefangen ist. Zwischen den bevorzugt radial angeordneten Stegen 64 sind freie Durchgänge für das Strömungsmedium vorhanden. Die Stege 64 und / oder der Lagerkörper 62 sind derart elastisch nachgiebig ausgebildet und / oder angeordnet, dass der Führungskörper 52 mit dem Betätigungselement 34 in Richtung der Achse 66 bewegbar ist, wie es nachfolgend näher erläutert wird.

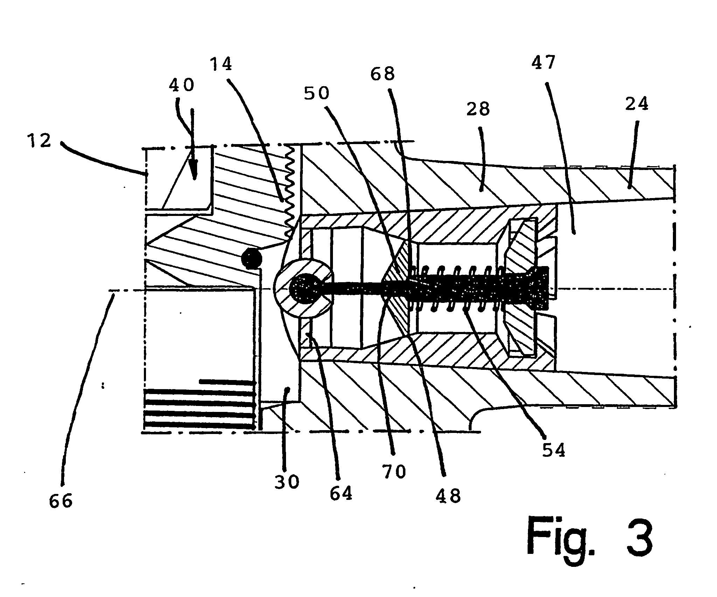

Gemäß Fig. 3 ist die Schließeinrichtung 28 in der Verschlussposition dargestellt, in welcher die Verbindung zwischen dem innenraum 30 der Armatur bzw. des Stutzens und dem Innenraum 47 des Abzweigstutzens 28 abgesperrt ist. Infolge einer Druckdifferenz zwischen den beiden Innenräumen 30 und 47 wurde der Ventilkörper 50 durch den Mediendruck im Innenraum 30 gemäß Zeichnung nach rechts auf den insbesondere konischen Ventilsitz 48 derart gedrückt, dass die Verbindung mittels der selbsttätigen Sicherheits-Schließeinrichtung 28 abgesperrt ist. Hierbei liegt der Ventilkörper 50 auf einem bevorzugt konischen Dichtsitz 68 des Führungskörpers 52 derart auf, dass im Bereich der zentralen Durchführung 70 des Ventilkörpers 52 die Verbindung dicht verschlossen ist.

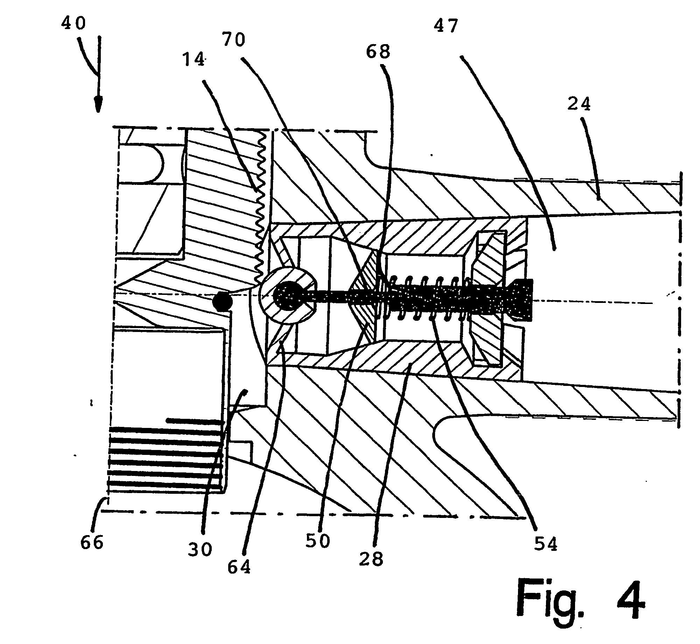

Fig. 4 zeigt eine Detaildarstellung der Armatur zu Beginn der Freigabe der Verbindung zwischen den Innenräumen 30 und 47 aufgrund der externen Aktivierung der Sicherheits-Schließeinrichtung 28 mittels des Körpers 14. Nunmehr ist nämlich der Körper 14 in Richtung des Pfeiles 40 soweit nach unten bewegt, dass das Betätigungselement 32 aufgrund des Eingriffs des Körpers 14 gemäß Zeichnung in Richtung der Achse 66 nach rechts bewegt ist. Hierdurch ist zwischen dem Ventilkörper 50 und dem Dichtsitz 68 ein kleiner Spalt entstanden, durch welchen ein Druckausgleich zwischen den Innenräumen 30 und 47 ermöglicht wurde, zumal ferner ein Ringspalt zwischen der zentralen Durchführung 70 und dem Führungskörper 52 vorhanden ist. Sodann wird mittels des als Druckfeder ausgebildeten Federelements 54 der Ventilkörper 50 in Richtung zum Innenraum 30 der Armatur, gemäß Zeichnung nach links, verschoben.

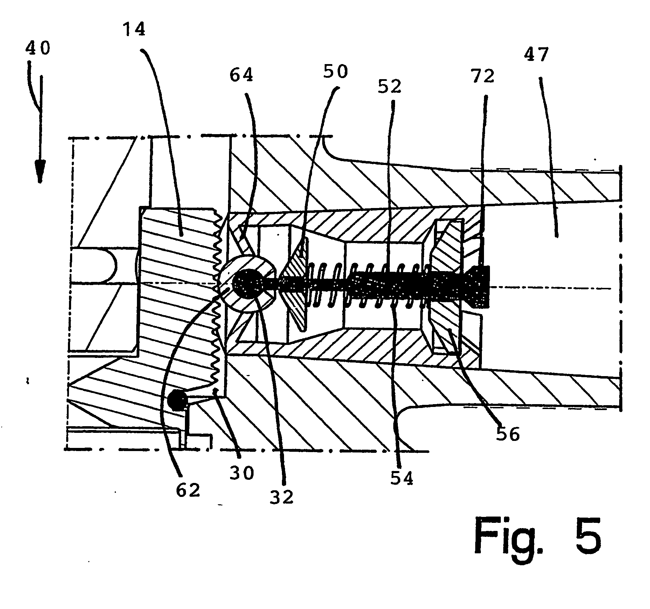

Fig. 5 zeigt die Schließeinrichtung nach erfolgter Freigabe der Verbindung, wobei nunmehr der Ventilkörper 50 mittels des Federelements 54 vollständig in Richtung zum Innenraum 30 bewegt ist. Wird nachfolgend der Körper 14 entgegen der Richtung des Pfeiles 40 nach oben bewegt, bis der Körper 14 außer Eingriff mit dem Betätigungselement 32 und / oder dem Lagerkörper 62 ist, so werden mittels des Federelements 54 der Ventilkörper 50 und der Führungskörper 52 mit dem integrierten Betätigungselement 32 noch etwas weiter in Richtung zum Innenraum 30 so weit bewegt, bis die oben an Hand von Fig. 2 erläuterte Ausgangsposition eingenommen ist. In dieser Ausgangsposition ist der Führungskörper 52 mittels des erweiterten Ansatzes 72 bezüglich des Stützkörpers 56 definiert festgelegt. Es sei festgehalten, dass die Stege 64 derart elastisch nachgiebig ausgebildet sind, dass die erläuterten Bewegungen des Lagerkörpers 62 und somit des Führungskörpers 52 ohne weiteres durchführbar sind. Der Lagerkörper 62 und die Stege 64 bestehen bevorzugt aus Kunststoff und sind insbesondere Bestandteil einer Kunststoffhülse der Schließeinrichtung 28. Ferner kann die Hülse der Schließeinrichtung auch integraler Bestandteil der Armatur und einstückig mit dieser ausgebildet sein.

### Bezugszeichen

- 2: Stutzen
- 4: Sattelstück
- 6: Innenfläche von 4
- 8: Heizwicklung
- 10: Längsachse von 6
- 11: Schelle
- 12: Stutzenachse
- 14: Körper
- 16: Bohrer
- 18: Kappe
- 19: Spindel
- 20: Dichtungsring
- 21: Zapfen
- 22: Außengewinde von 14
- 24: Abzweigstutzen
- 26: strichpunktierte Linie
- 28: Schließeinrichtung
- 30: Innenraum von 2
- 32: Betätigungselement
- 34: freies Ende
- 36: vorgegebener Abstand
- 38: Innenfläche von 2 bzw. 30
- 40: Pfeil
- 42: Dichtfläche / Ventilkörper von 14
- 44: Ventilsitz von 2
- 46: Durchgangsraum von 28
- 47: Innenraum von 24
- 50: Ventilkörper von 28
- 48: Ventilsitz von 28
- 52: Führungskörper
- 54: Federelement
- 56: Stützkörper
- 58: zentrale Bohrung in 56
- 60: Durchgangsbohrung in 56
- 62: Lagerkörper
- 64: Steg
- 66: Achse von 28
- 68: Dichtsitz von 52
- 70: zentrale Durchführung in 50
- 72: erweiterter Ansatz / Halteelement von 52

## Patentansprüche

1. Armatur, welche mit einem Rohr verbindbar ist, enthaltend einen Stutzen (2), in welchem ein Körper (14) entlang einer Stutzenachse (12) axial bewegbar angeordnet ist, wobei der Körper (14) einen Bohrer (16) zum Anbohren des Rohres und / oder einen Ventilkörper (42) eines Ventils aufweist, und ferner enthaltend einen insbesondere am genannten Stutzen (2) angeordneten Abzweigstutzen (24), an welchen eine Abzweigleitung anschließbar ist,
**dadurch gekennzeichnet, dass** im Abzweigstutzen (24) eine Schließeinrichtung (28) mit einem Betätigungselement (32) derart angeordnet ist, dass mittels des im Stutzen (2) axial bewegbaren Körpers (14) die Betätigung der Schließeinrichtung (28) durchführbar ist.

2. Armatur nach Anspruch 1, **dadurch gekennzeichnet, dass** die Schließeinrichtung (28) als Sicherheits-Schließeinrichtung ausgebildet ist, welche aufgrund einer vorgegebenen Druckdifferenz zwischen einem Innenraum (30) des Stutzens (2) und einem Innenraum (47) des Abzweigstutzens (24) selbsttätig schließbar ist und welche durch axiale Bewegung des Körpers (14) extern aktivierbar und / oder freigebbar ist.

3. Armatur nach Anspruch 1 oder 2, **dadurch gekennzeichnet, dass** die Schließeinrichtung (28) einen Ventilkörper (50) mit zugeordnetem Ventilsitz (48) enthält, und / oder dass der Ventilkörper (50) mittels eines Führungskörpers (52) geführt und insbesondere bezüglich einer Achse (66) der Schließeinrichtung (28) axial bewegbar angeordnet ist, und / oder dass mit dem Führungskörper (52) das Betätigungselement (32) insbesondere einteilig verbunden ist.

4. Armatur nach einem der Ansprüche 1 bis 3, **dadurch gekennzeichnet, dass** das Betätigungselement (32) und / oder der Führungskörper (52) in Richtung der Achse (66) der Schließeinrichtung (28) bewegbar angeordnet sind, und / oder dass das Betätigungselement (32) aus einer Ausgangsposition heraus in der Schließposition der Schließeinrichtung (28) in Richtung zum Innenraum (30) des Stutzens (2) verschoben angeordnet ist.

5. Armatur nach einem der Ansprüche 1 bis 4, **dadurch gekennzeichnet, dass** der Führungskörper (52) und / oder das Betätigungselement (32) in einem Bereich zwischen dem Innenraum (30) und dem Ventilkörper (50) mittels eines Lagerkörpers (62) bewegbar gelagert ist, und / oder dass der Lagerkörper (62) mittels bewegbaren und / oder nachgiebigen Elementen und / oder Stegen (54) bezüglich der Achse (66) der Schließeinrichtung (28) verschiebbar und / oder bewegbar angeordnet ist.

6. Armatur nach einem der Ansprüche 1 bis 5, **dadurch gekennzeichnet, dass** der Führungskörper (52) mittels eines Stützkörpers (56) verschiebbar gelagert ist, und / oder dass der Stützkörper (56) bezüglich des Ventilkörpers (50) auf der dem Innenraum (30) des Stutzens (2) abgewandten Seite angeordnet ist.

7. Armatur nach Anspruch 6, **dadurch gekennzeichnet, dass** der Führungskörper (52) einen erweiterten Ansatz und / oder ein Halteelement (72) aufweist, mittels welchem die Bewegung des Führungskörpers (52) in Richtung zum Innenraum (30) des Stutzens (2) begrenzt ist, und / oder dass das Betätigungselement (32) integraler Bestandteil des Führungskörpers (52) ist.

8. Armatur nach einem der Ansprüche 1 bis 7, **dadurch gekennzeichnet, dass** der Ventilkörper (50) auf dem Stützkörper (56) mittels eines Federelements (54) abgefangen ist, und / oder dass das Federelement (54) den Führungskörper (52) umgibt.

9. Armatur nach einem der Ansprüche 1 bis 8, **dadurch gekennzeichnet, dass** der Führungskörper (52) und / oder das Betätigungselement (32) durch eine zentrale Durchführung (70) des Ventilkörpers (50) durchgreift, und / oder dass in der Verschlußposition der Ventilkörper (50) an einem Dichtsitz (68) des Führungskörpers (52) dichtend anliegt.

## Claims

1. Fitting, which can be connected to a pipe, comprising a connecting piece (2), in which a fitting body (14) is arranged along a connecting piece axis (12) in an axially movable manner, wherein the body (14) comprises a drill (16) for drilling the tube and/or a valve body (42) of a valve, and also comprising a branch connecting piece (24), to which a branch pipe can be connected, arranged, in particular, on said connecting piece (2), **characterised in that** a closure device (28) comprising an actuating element (32) is arranged in the branch connecting piece (24) such that the closure device (28) can be actuated by means of the body (14), which is axially movable in the connecting piece (2).

2. Fitting according to claim 1, **characterised in that** the closure device (28) is configured as a safety closure device, which can close automatically due to a predetermined pressure difference between an interior space (30) of the connecting piece (2) and an interior space (47) of the branch connecting piece (24), and which can be activated externally and/or released by axial movement of the body (14).

3. Fitting according to either claim 1 or claim 2, **characterised in that** the closure device (28) comprises a valve body (50) having an associated valve seat (48), and/or **in that** the valve body (50) is guided by means of a guide body (52) and is arranged in an axially movable manner, in particular, relative to an axis (66) of the closure device (28), and/or **in that** the actuating element (32) is connected, in particular, in one piece to the guide body (52).

4. Fitting according to any one of claim 1 to 3, **characterised in that** the actuating element (32) and/or the guide body (52) are movably arranged in the direction of the axis (66) of the closure device (28), and/or **in that** the actuating element (32) is arranged in a displaced manner from an initial position in the closed position of the closure device (28) in the direction of the interior space (30) of the connecting piece (2).

5. Fitting according to any one of claims 1 to 4, **characterised in that** the guide body (52) and/or the actuating element (32) is movably mounted in a region between the interior space (30) and the valve body (50) by means of a bearing element (62), and/or **in that** the bearing element (62) is displaceably and/or movably arranged relative to the axis (66) of the closure device (28) by means of movable and/or flexible elements and/or bars (54).

6. Fitting according to any one of claims 1 to 5, **characterised in that** the guide body (52) is displaceably mounted by means of a support body (56), and/or **in that** the support body (56) is arranged relative to the valve body (50) on the side remote from the interior space (30) of the connecting piece (2).

7. Fitting according to claim 6, **characterised in that** the guide body (52) comprises a further lug and/or a holding element (72) by means of which the movement of the guide body (52) in the direction of the interior space (30) of the connecting piece (2) is limited, and/or **in that** the actuating element (32) is an integral part of the guide body (52).

8. Fitting according to any one of claims 1 to 7, **characterised in that** the valve body (50) is cushioned on the support body (56) by means of a spring element (54), and/or **in that** the spring element (54) surrounds the guide body (52).

9. Fitting according to any one of claims 1 to 8, **characterised in that** the guide body (52) and/or the actuating element (32) reaches through a central duct (70) of the valve body (50), and/or **in that** the valve body (50) sits tight against a sealing seat (68) of the guide body (52) in the closed position.

## Revendications

1. Accessoire de plomberie qui peut être relié à un conduit, comprenant un manchon (2) dans lequel un corps (14) est monté de façon mobile axialement le long d'un axe de manchon (12), le corps (14) comprenant un taraud (16) pour percer le conduit et/ou un corps de vanne (42) d'une vanne, et comprenant de plus un manchon de dérivation (24) placé en particulier sur ledit manchon (2) et sur lequel peut se raccorder une conduite de dérivation,
***caractérisé en ce qu'**un* dispositif de fermeture (28) est placé avec un élément d'actionnement (32) dans le manchon de dérivation (24) de telle manière qu'au moyen du corps (14) mobile axialement dans le manchon (2), on peut effectuer l'actionnement du dispositif de fermeture (28).

2. Accessoire de plomberie selon la revendication 1, ***caractérisé en ce que*** le dispositif de fermeture (28) est conformé en dispositif de fermeture de sécurité qui peut se fermer automatiquement par suite d'une différence de pression prédéterminée entre un intérieur (30) du manchon (2) et un intérieur (47) du manchon de dérivation (24) et qui peut être activé de façon externe et/ou libéré par un déplacement axial du corps (14).

3. Accessoire de plomberie selon la revendication 1 ou 2, ***caractérisé en ce que*** le dispositif de fermeture (28) comprend un corps (50) de vanne avec un siège de vanne associé (48), et/ou ***en ce que*** le corps (50) de vanne est guidé au moyen d'un corps de guidage (52) et est en particulier mobile axialement par rapport à un axe (66) du dispositif de fermeture (28), et/ou ***en ce qu**'au* corps de guidage (52) est relié l'élément d'actionnement (32), en particulier d'un seul tenant.

4. Accessoire de plomberie selon l'une quelconque des revendications 1 à 3, ***caractérisé en ce que*** l'élément d'actionnement (32) et/ou le corps de guidage (52) est mobile dans la direction de l'axe (66) du dispositif de fermeture (28), et/ou ***en ce que*** l'élément d'actionnement (32) est monté mobile d'une position de départ à la position de fermeture du dispositif de fermeture (28) en direction de l'intérieur (30) du manchon (2).

5. Accessoire de plomberie selon l'une quelconque des revendications 1 à 4, ***caractérisé en ce que*** le corps de guidage (52) et/ou l'élément d'actionnement (32) est monté mobile dans une zone entre l'intérieur (30) et le corps (50) de vanne au moyen d'un corps de soutien (62), et/ou ***en ce que*** le corps de soutien (62) est monté mobile et/ou déplaçable par rapport à l'axe (66) du dispositif de fermeture (28) au moyen d'élément et/ou barres mobiles et/ou élastiques (54).

6. Accessoire de plomberie selon l'une quelconque des revendications 1 à 5, ***caractérisé en ce que*** le corps de guidage (52) est monté mobile au moyen d'un corps d'appui (56) et/ou ***en ce que**,* par rapport au corps (50) de vanne, le corps d'appui (56) est monté du côté opposé à l'intérieur (30) du manchon (2).

7. Accessoire de plomberie selon la revendication 6, ***caractérisé en ce que*** le corps de guidage (52) présente une embase élargie et/ou un élément de maintien (72) au moyen duquel le mouvement du corps de guidage (52) en direction de l'intérieur (30) du manchon (2) est limité, et/ou ***en ce que*** l'élément d'actionnement (32) fait partie intégrante du corps de guidage (52).

8. Accessoire de plomberie selon l'une quelconque des revendications 1 à 7, ***caractérisé en ce que*** le corps (50) de vanne est retenu sur le corps d'appui (56) au moyen d'un élément à ressort (54), et/ou ***en ce que*** l'élément à ressort (54) entoure le corps de guidage (52).

9. Accessoire de plomberie selon l'une quelconque des revendications 1 à 8, ***caractérisé en ce que*** le corps de guidage (52) et/ou l'élément d'actionnement (32) traverse un passage central (70) du corps (50) de vanne, et/ou ***en ce que**,* dans la position de fermeture, le corps (50) de vanne s'appuie hermétiquement contre un siège d'étanchéité (68) du corps de guidage (52).
